Europäisches Patentamt

European Patent Office

Office européen des brevets

(19)

(11) Publication number: **0 271 229**
**A1**

## (12) EUROPEAN PATENT APPLICATION

(21) Application number: **87310046.5**

(51) Int. Cl.⁴: **B26D 7/26**

(22) Date of filing: **13.11.87**

(30) Priority: **13.11.86 GB 8627184**

(43) Date of publication of application:
**15.06.88 Bulletin 88/24**

(84) Designated Contracting States:
**DE GB SE**

(71) Applicant: **DRG (UK) LIMITED**
**1 Redcliffe Street**
**Bristol Avon, BS99 7QY(GB)**

(72) Inventor: **Bowman, Kenneth Albert**
**11 Kelston Grove**
**Hanham Bristol, BS15 3RJ(GB)**

(74) Representative: **Calderbank, Thomas Roger et al**
**MEWBURN ELLIS & CO. 2/3 Cursitor Street**
**London EC4A 1BQ(GB)**

(54) **Cutting webs of material.**

(57) So that the cutting pitch can be altered efficiently, cutting apparatus has a plurality of different cutting devices (11,12,13;111,112,113), displaceable to bring a desired one to a cutting station. Each device may employ cutting rolls (14;114), and is preferably displaceable axially thereof. Modular construction allows exchange of devices.

EP 0 271 229 A1

FIG.3

## CUTTING WEBS OF MATERIAL

The present invention relates to an apparatus for cutting one or more webs of material, such as paper, into separate sections.

In the production of printed books or leaflets, it is common for a web of material to be passed through one or more printers, and then cut into a plurality of web-ribbons. The ribbons are then superposed and passed to a cut-off device which cuts the superposed ribbons into suitable lengths. The output of the cutting apparatus is then blocks of ribbon lengths.

Usually, the ribbons are folded, either before or after they have been cut. For example, immediately after the super position of the ribbons, they may be perforated longitudinally and then passed to a former-folder which folds them in half longitudinally along the perforation. The folded ribbon may then be passed to the cutting device. Alternatively, the folding may be carried out after cutting.

These techniques are well-known, and indeed standard cutting devices are also well-known. Commonly, the cutting device comprises a plurality of pairs of contra-rotating rolls, between which the web(s) (e.g. the superposed ribbons discussed above) pass. One pair of rolls are cutting rolls, which carry cutting tools at a suitable point on their periphery. For example, one roll may carry a knife blade which meshes with a suitable surface on the other roll to cut the web(s) between the knife and the other surface. In addition, each device has one or more pairs of draw rolls, which draw the web through the device. Obviously, in order to prevent strains being placed on the web(s), the cutting rolls and the draw rolls must all be synchronised, both in size and speed of rotation.

With such a system, the "pitch" of the cutting of the web(s), i.e. the distance between one cut and the next along the web, is determined by the circumference of the cutting rolls. In the system mentioned above, where the cutting is carried out by a knife carried on the periphery of one of the rolls, the pitch of the cuts in the web is equal to the circumference of the cutting roll.

When it is desired to change from one cutting pitch to the next, however, it is necessary to remove completely both the cutting and draw rolls, and to replace them with rolls of different sizes to accommodate the new cutting pitch. Thus, a change of cutting pitch requires a considerable amount of work. The present invention proposes to overcome this by providing a plurality of cutting devices adapted to give different cutting lengths in a single integral unit, which unit is movable relative to the web(s). Thus, by moving the unit the cutting device of the unit which gives the correct cutting pitch may be presented to the web, and when it is wanted to change that pitch, it is simply necessary to move the unit until a new cutting device is presented to the web.

The cutting devices themselves may be the conventional type of cutting device described above, with cutting and draw rolls. As mentioned above, the pitch of the cut is then determined by the circumference of the cutting rolls. However, by providing a plurality of cutting tools around the circumference of the cutting rolls it is possible to cut the web to a pitch which is a fraction of the circumference of the cutting rolls.

In one arrangement, the rolls are positioned with their axes generally perpendicular to the direction of movement of the unit, so that the unit moves generally perpendicular to the plane of the web. However, such an arrangement has the problem that, if there are more than two cutting devices, access to the inner cutting devices of the unit is difficult, e.g. for repair. Therefore in a preferred arrangement the cutting devices are positioned so that the axes of the rolls are generally parallel to the direction of movement of the unit. The faces of the cutting devices parallel to the direction of movement of the unit may then be open, permitting access to the rolls.

Preferably, the apparatus is provided with a single roll drive system, which is engagable, via clutches, with only those rolls which are currently in use (i.e. the rolls of the cutting device which is currently involved in cutting and drawing the web(s)). When the pitch of the cut is to be changed, the drive may then be dis-engaged, the unit moved, and the drive re-engaged to the rolls of the correct cutting device.

The assembly may be of modular construction, with removable cartridges each comprising a cutting device. Each cartridge may also include gearing for driving the cylinders. The arrangement may be such that when a cutting device is moved to the operating position, its gears automatically become driven suitably by engaging a driven gear of a folding assembly or other work assembly that is adjacent at the upstream or downstream side.

Embodiments of the invention will now be described in detail, by way of example, with reference to the accompanying drawings in which:

Fig. 1 shows a schematic view of a cutting apparatus according to a first embodiment of the present invention;

Fig. 2 shows a detail of one cutting device of the cutting apparatus of Fig. 1;

Fig. 3 shows a schematic view of a cutting apparatus according to a second embodiment of the present invention.

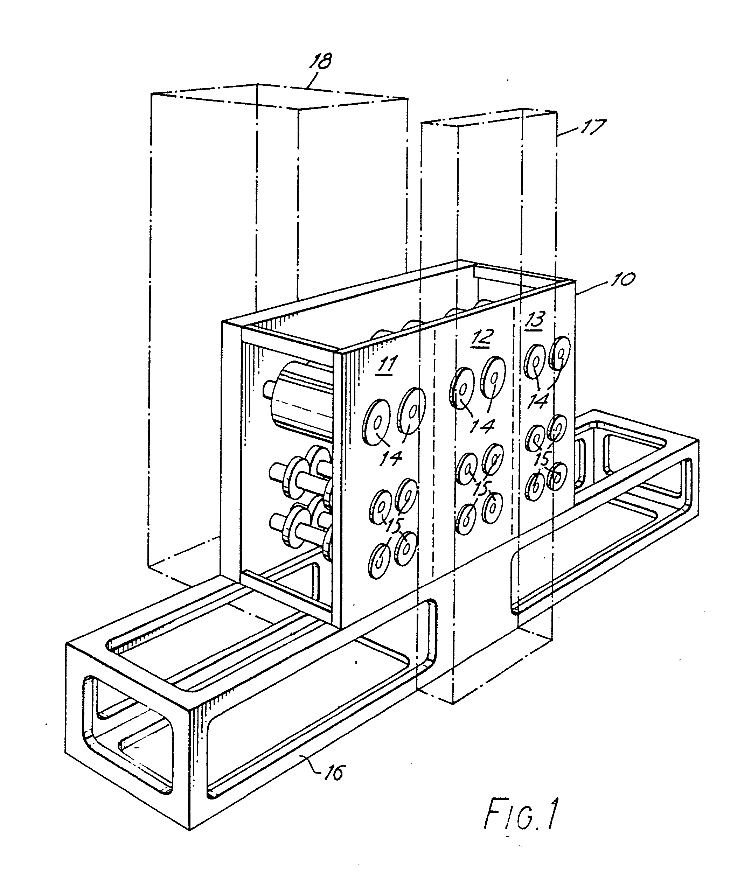

Referring first to Fig. 1, a cutting apparatus according to a first embodiment of the present invention comprises a unit 10 having a plurality of web-cutting devices. As illustrated, the unit 10 has three web-cutting devices 11,12,13 which are integral with each other, so that the unit 10 is a rigid structure. Each cutting device 11,12,13 has a pair of cutting rolls 14, and pairs of draw rolls 15 with the axes of the rolls being perpendicular to the direction of movement of the unit.

The unit 10 is mounted on a block 16, along which it is slidable transversely to the axes of the rolls 14,15. Since the web(s) pass between the rolls 14,15, this means that the block 10 is slidable generally perpendicularly to the web(s). The sliding of the unit 10 on the block 16 may be achieved by a pneumatic jack, or may be by a motorised or manually driven rack and pinion drive. Also suitable clamps (e.g. pneumatic) may be provided to lock the unit in position whilst any one of the cutting devices is in action. However moved, the purpose of the movement is to present a suitable one of the cutting devices 11,12,13 to the web(s) to cut the web(s) into lengths determined by the cutting rolls 14 of that cutting device 11,12,13.

Also shown in Fig. 1 are adjacent parts 17,18 of the apparatus, one part 18 of which may contain the drive to the rolls 14,15. As mentioned above, it is preferable that a clutch system is provided between the drive and the rolls, so that only those rolls in the cutting device 11,12,13 which is currently in use are driven rolls. Thus, for moving the unit 10, the drive to the rolls of one cutting device is dis-engaged, the unit 10 is moved, and the drive is re-engaged to the rolls of another cutting device.

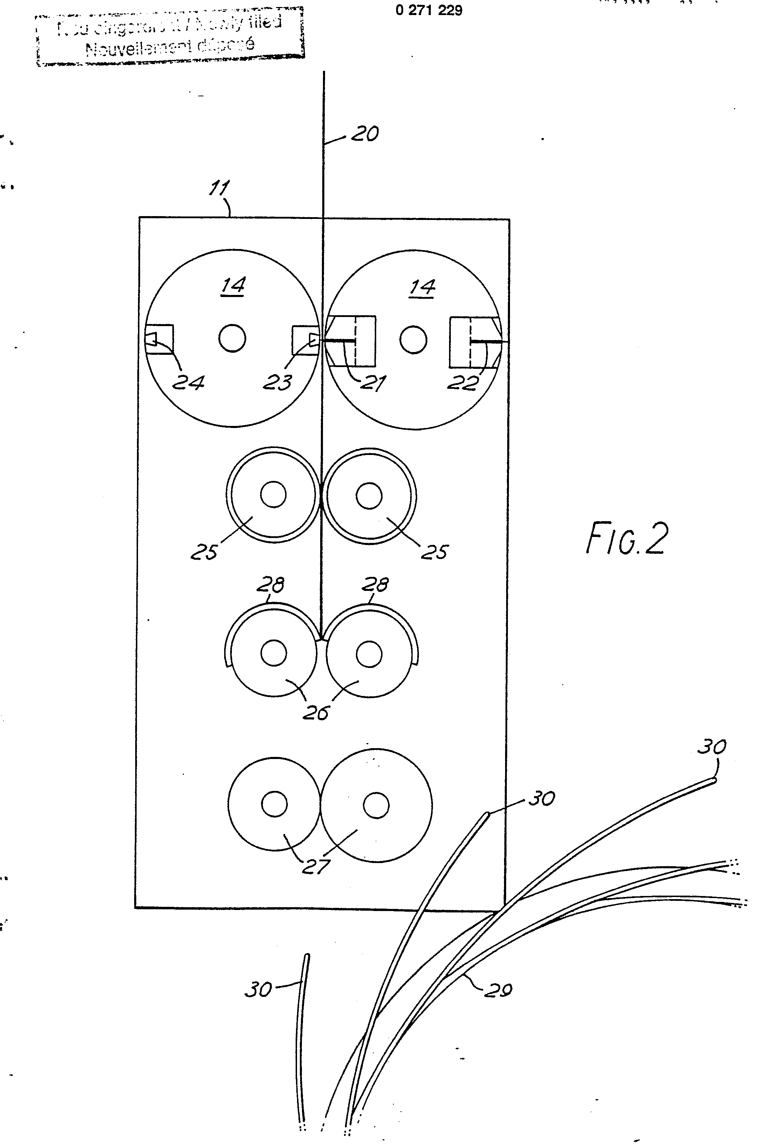

The structure of one cutting device 11 will now be described. In fact, however, this is generally conventional. Furthermore, it differs from the other cutting devices 12,13 only in the size of the rolls. First, referring to Fig. 2, one or more webs 20 of material, e.g. paper to be cut, passes into the cutting device 11 between the cutting rolls 14. As shown, one cutting roll 14 carries knife blades 21,22 at diametrically opposite sides of its circumference, which knife blades 21,22 rotate in synchronism with abutment surfaces 23,24 on the other cutting roll, so that when the knife blade and its associated cutting surface 21,23 or 22,24 are aligned, the web 20 is cut between them. Thus, as illustrated, the pitch of the cut of the web will be half the circumference of the cutting rolls 14.

In addition, as shown in Fig. 2, the device 11 has three pairs of draw rolls 25,26 and 27. The web 20 is guided through the draw rolls 25,26 and 27, and cutting occurs in the position shown in Fig. 2 in which the web 20 is gripped both by the first pair of cutting rolls 25 and the second pair of cutting rolls 26. Then, as the draw rolls 25,26 rotate, the cut part of the web is drawn downwardly until it engages the third pair of draw rolls 27. At this point, the cut section of the web is just clear of the first pair of draw rolls 25.

It can be seen that the second pair of draw rolls 26 each has a tread surface 28 extending around only part of its circumference. The reason for this is so that after a predetermined distance of movement where the cut part of the web is engaged both with the second pair of draw rolls 26 and the third pair of draw rolls 27, the cut part of the web is released from the second pair of draw rolls 26, at the end of the tread surface 28. In this way, the final move ment of the cut part of the web out of the cutting device 11 is determined entirely by the third pair of draw rolls 27. It is also possible to provide different treads on different parts of the draw rolls, and make the rolls axially slidable. Thus in one position of the rolls the web(s) may encounter treads extending completely around the rolls, whilst in another position the treads may be partial only, so that for part of the rotation of the rolls the web is released. Again this is conventional.

Also as illustrated in Fig. 2, a flyer 29 having a plurality of flanges 30 which form pockets for the cut parts of the web, may be provided below the cutting device 11. Indeed, the flyer 29 may be stationary relative to the whole of the unit 10, so that as the unit moves, different lengths of web(s) may be propelled into the pockets of the flyer 29. As is conventional, the flyer 29 may be operated so that each pocket receives only one cut length of web(s), or may be operated intermittently so that a plurality of cut lengths fall into the same pocket.

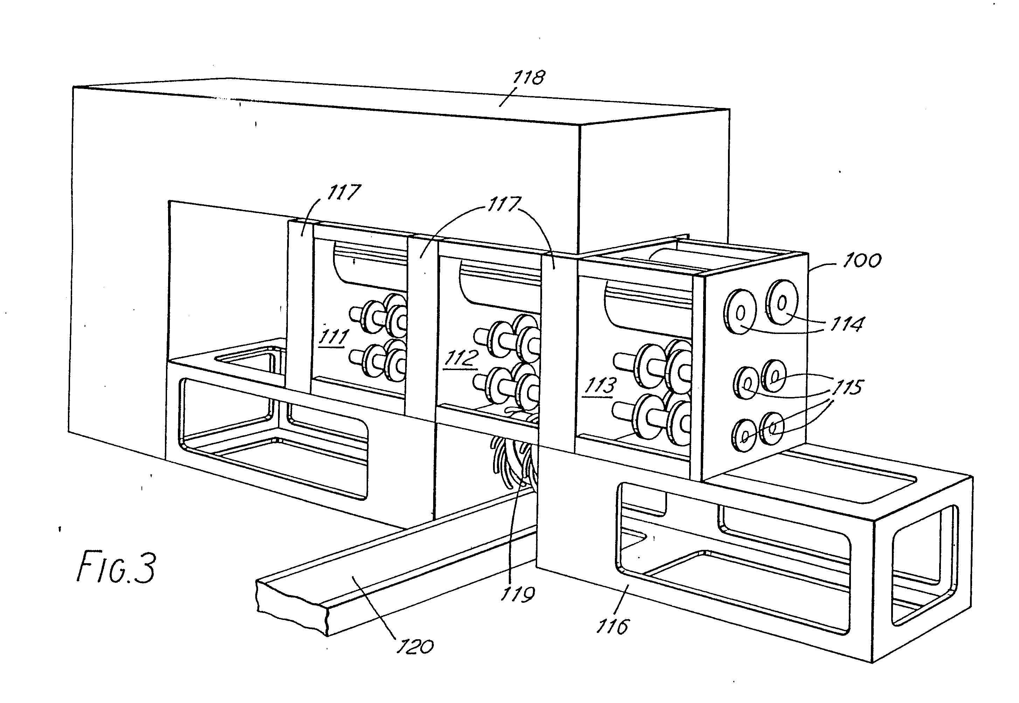

In the second embodiment of the present invention, illustrated in Fig. 3, again a unit 100 is provided having three cutting devices 111,112,113. However, in this embodiment the cutting devices are in line in a direction parallel to the axes of their rolls 114,115, rather than side-by-side as in the first embodiment. Thus the unit 100 moves parallel to the plane of the web(s).

As with the first embodiment, the unit 100 is mounted on a block 116 and movement controlled by a pneumatic jack or a motorised or manual rack and pinion drives. Clamps may be provided to lock the unit 100 in place when any one of the cutting devices 111,112,113 is in action.

In this second embodiment, the ends of the rolls 114,115 are not exposed (except at the ends of the unit) and so it is more difficult to drive them. In practice, the parts 117 of the unit joining the cutting devices 111,112, 113, and at one end of the endmost cutting unit 111, may contain a gear drive arrangement connected between the rolls 114,115 and a power drive mounted in an adjacent part 118 of the cutting apparatus. Again, it is preferable that a clutch arrangement ensures that the power drive in the part 118 is connected only to that cutting device 111,112,113 which is in action, so that the other cutting devices may be repaired or modified without danger.

The advantage of the second embodiment is that the sides of the cutting devices 111,112,113 are open and therefore access to the rolls 114,115 is easy. This makes repair or maintenance more simple.

The cutting devices 111,112,113 may be of conventional design, e.g. as discussed with reference to Fig. 2. Also, as illustrated in Fig. 3, a flyer 119 may be provided at a position in the block 116 corresponding to the position of the cutting device in use. The flyer 119 receives the cut webs from the appropriate cutting unit 111,112,113, and deposits the cut webs on a conveyor belt 120.

Even with the configuration of the second embodiment, it is relatively difficult to gain access to the cutting device 112 in the middle. We have two ways of improving matters, which can be employed singly or together:-

(a) Use of only two cutting devices. When one is in use, the other can be subjected to repair, maintenance or modification, e.g. to alter the pitch of the cut by changing cutting rolls or numbers of knife blades.

(b) Modular construction. Each cutting device is built as a removable cartridge. Thus, in an assembly generally as shown in Fig. 3, there are three cartridges 111,112,113 mounted together in a single frame which is slidable on the block 116. Each cartridge comprises operator-side and drive-side frames which are rigidly linked by cross bracing members. The drive-side frame houses the cylinder gears in an oil tight enclosure. There may be a folder unit upstream of the assembly, for feeding folded webs(s) to the operative cutting device. The folder unit may have a pivoted quadrant gear which is moved into mesh with one of the cylinder gears when the cartridge is locked in its working position. When a cartridge is not in its working position, it can be removed from the assembly. Thus there may be "spare" cartridges, so that a replacement can be mounted, e.g. to alter the cutting pitch or to allow a damaged unit to be repaired. An assembly with only two cutting devices, as described in (a), can be compact but still allow easy alteration of pitch to a range of values, by means of the modular construction.

Thus, by combining a plurality of cutting devices which may each be of conventional design, into a single unit movable relative to the web, the problem of having to dismantle the cutting device to cause a change in cutting length may be obviated, and more rapid processing of the web may be achieved. The present invention is particularly applicable to the cutting of webs of printed paper, which may be folded either prior to, or after cutting in known ways, so that what is being cut is effectively groups of "signatures" which will subsequently form parts of a book.

## Claims

1. Apparatus for cutting webs comprising a plurality of cutting devices (11,12,13;111,112,113) adapted to give different cutting lengths mounted (10;100) so as to be displaceable such that a desired device (11,12,13;111,112,113) is selectively locatable at a cutting location for acting to cut a web or webs.

2. Apparatus according to claim 1 wherein the cutting devices (11,12,13;111,112,113) are coupled (10;100) to form a unit which is displaceable to effect said selective location.

3. Apparatus according to claim 1 or 2 wherein each cutting device (11,12,13;111,112,113) comprises cutting rolls (14;114).

4. Apparatus according to claim 3 wherein the cutting devices (111,112,113) are displaceable parallel to the roll (114) axes.

5. Apparatus according to claim 3 wherein the cutting devices (11,12,13) are displaceable transversely to the roll (14) axes.

6. Apparatus according to claim 3,4 or 5 having roll drive means arranged to drive the rolls (14,15;114,115) of only that cutting device (11,12,13;111,112,113) which is located at the cutting location.

7. Apparatus according to any preceding claim wherein there are only two cutting devices (14,15;114,115); the cutting devices comprising cutting rolls (14;114) and being located side by side with their roll axes parallel.

8. Apparatus according to any preceding claim wherein the cutting devices (11,12,13;111,112,113) are of modular construction so as to be individually removable from the apparatus.

9. A kit of parts comprising apparatus according to claim 8 and at least one further cutting device module (11,12,13;111,112,113).

10. Web processing apparatus comprising apparatus according to any of claims 1 to 8; means for feeding a web or webs to the cutting location; and means (29;119,120) for receiving the cut web-(s) from the cutting location.

11. Web processing apparatus according to claim 10 including a folding assembly operatively adjacent the cutting location; and wherein the cutting apparatus is according to claim 6 and has respective gearing for each device (11,12,13;111,112,113), and the folding assembly has a driven gear adapted to engage and drive the gearing of a device (11,12,13;111,112,113) when this is displaced to the cutting location.

*FIG.1*

0 271 229

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 328 727 (TOKUNO) <br> * Whole document * | 1,3,5,7 ,8,10 | B 26 D  7/26 |
| X | DE-A-2 522 654 (KASTER) <br> * Whole document * | 1-4,6,8 -10 | |
| X | EP-A-0 175 111 (ACHELPOHL) <br> * Whole document * | 1-3 | |
| X | DE-U-8 422 845 (MULTIGRAF A.G.) <br> * Claim 3; figures 3,4 * | 1,10 | |

TECHNICAL FIELDS SEARCHED (Int. Cl.4)

B 23 D
B 26 D
B 65 H

The present search report has been drawn up for all claims

| Place of search | Date of completion of the search | Examiner |
|---|---|---|
| THE HAGUE | 17-02-1988 | BERGHMANS H.F. |

EPO FORM 1503 03.82 (P0401)